# EUROPÄISCHE PATENTSCHRIFT

(11) **EP 2 408 536 B1**
(45) Veröffentlichungstag und Bekanntmachung des Hinweises auf die Patenterteilung: **30.07.2014**
(21) Anmeldenummer: 10710018.2
(22) Anmeldetag: 18.03.2010
(51) Int. Cl.: B01D 53/02

(54) **VERFAHREN ZUM ABTRENNEN SAURER GASE MIT HILFE VON MIT AMINEN IMPRÄGNIERTEN METALLORGANISCHEN GERÜSTMATERIALIEN**
PROCESS FOR SEPARATING ACID GASES USING AMINE IMPREGNATED METAL ORGANIC FRAMEWORKS
PROCÉDÉ POUR LA SÉPARATION DES GAZ ACIDES À L'AIDE DES STRUCTURES ORGANOMETALLIQUES IMPREGNÉES AVEC DES AMINES

(30) Priorität: 20.03.2009 EP 09155706
(43) Veröffentlichungstag der Anmeldung: 25.01.2012
(73) Patentinhaber: BASF SE, 67056 Ludwigshafen (DE)
(72) Erfinder: TRUKHAN, Natalia, 67063 Ludwigshafen (DE); MÜLLER, Ulrich, 67435 Neustadt (DE); MELDER, Johann-Peter, 67459 Böhl-Iggelheim (DE); BRUGHMANS, Steven, 68167 Mannheim (DE); KATZ, Torsten, 67434 Neustadt (DE)
(86) Internationale Anmeldenummer: PCT/EP2010/053530
(87) Internationale Veröffentlichungsnummer: WO 2010/106133

(56) Entgegenhaltungen:
- WO-A1-2008/021700
- WO-A1-2008/138989
- WO-A1-2008/142059
- WO-A2-2007/038508
- US-A- 5 876 488

## Beschreibung

Die vorliegende Erfindung betrifft Verfahren zum Abtrennen zumindest eines sauren Gases aus einem Gasgemisch in Gegenwart von metallorganischen Gerüstmaterialien sowie solche Gerüstmaterialien als solche.

Das Abtrennen von sauren Gasen aus Gasgemischen stellt eine bekannte Aufgabe dar. Dies kann beispielsweise durch Absorption erfolgen, in dem das Gasgemisch durch eine Flüssigkeit geleitet wird, die störende Komponenten in dem Gemisch aufnimmt, so dass ein Reinigungseffekt erzielt wird. Dieser Prozess wird allgemein als Gaswäsche bezeichnet. Geeignete Flüssigkeiten sind im Stand der Technik ebenfalls bekannt. Für saure Gase sind insbesondere Amine geeignet, um diese zu binden. Daher wird ein solcher Prozess, der mit Hilfe von Aminen durchgeführt wird, Aminwäsche bezeichnet.

Neben der Absorption saurer Gase wie Kohlendioxid, Schwefeloxiden oder Stickoxiden in Flüssigkeiten ist auch eine Adsorption an Feststoffen möglich. Hierbei haben sich beispielsweise Zeolithe, Aktivkohlen oder dergleichen als geeignet herausgestellt. Ein besonderes Augenmerk ist hierbei auf eine neue Klasse von Substanzen, den sogenannten metallorganischen Gerüstmaterialien, gerichtet.

Deren Eignung zur Adsorption von Gasen wie Kohlendioxid ist ebenfalls bekannt. Speziell für die Abtrennung von Kohlendioxid sind schon metallorganische Gerüstmaterialien in der Literatur beschrieben, wobei diese auch aminfunktionalisierte Liganden aufweisen können.

WO-A 2008/061958, WO 2007/038508, WO 2008/142059 und WO-A 2008/129051 beschreiben beispielsweise die Abtrennung von CO₂ aus Gasgemischen.

Auch bei G. Férey, Chem. Soc. Rev., 2008, 37, 191; B. Arstad, H. Fjellväg, K. O. Kongshaug, O. Swang, R. Blom, Adsorption, 2008, 14, 755 und P. L. Llewellyn, S. Bourrelly, C. Serre, Y. Filinchuk and G. Férey, Angew. Chem., 2006, 118, 7915, wird Bezug auf metallorganische Gerüstmaterialien genommen.

Trotz der im Stand der Technik bekannten Methoden besteht weiterhin ein Bedarf an alternativen Verfahren mit alternativen Adsorbentien für die Abtrennung saurer Gase aus Gasgemischen.

Eine Aufgabe der vorliegenden Erfindung liegt somit in der Bereitstellung solcher Verfahren und Adsorbentien.

Die Aufgabe wird gelöst durch ein Verfahren zum Abtrennen zumindest eines sauren Gases aus einem Gasgemisch, das das zumindest eine saure Gas enthält, den Schritt enthaltend
(a) Inkontaktbringen des Gasgemisches mit einem porösen metallorganischen Gerüstmaterial, wobei das Gerüstmaterial das zumindest eine saure Gas adsorbiert und wobei das Gerüstmaterial mindestens eine an mindestens ein Metallion koordinativ gebundene mindestens zweizähnige organische Verbindung enthält, dadurch gekennzeichnet, dass das poröse metallorganische Gerüstmaterial mit einem zur Gaswäsche geeigneten Amin imprägniert ist und wobei der Anteil an Amin im Bereich von 1 bis 100 mmol pro g Gerüstmaterial liegt.

Die Aufgabe wird weiterhin gelöst durch ein erfindungsgemäßes poröses metallorganisches Gerüstmaterial enthaltend mindestens eine an mindestens ein Metallion koordinativ gebundene mindestens zweizähnige organische Verbindung wobei das poröse metallorganische Gerüstmaterial mit einem zur Gaswäsche geeigneten Amin imprägniert ist und wobei der Anteil an Amin im Bereich von 1 bis 100 mmol pro g Gerüstmaterial liegt.

Es hat sich nämlich gezeigt, dass eine Abtrennung saurer Gase aus einem Gasgemisch insbesondere bei niedrigerem Druck durchgeführt werden kann, wenn metallorganische Gerüstmaterialien eingesetzt werden, die zuvor mit einem zur Gaswäsche geeigneten Amin imprägniert wurden.

Bei dem sauren Gas handelt es sich vorzugsweise um Kohlendioxid, ein Schwefeloxid, ein Stickoxid oder um Schwefelwasserstoff. Es können auch mehrere saure Gase in dem Gasgemisch vorhanden sein. Insbesondere können mehrere der Gase ausgewählt aus Kohlendioxid, ein Schwefeloxid, ein Stickoxid und Schwefelwasserstoff vorhanden sein. Insbesondere ist bevorzugt, wenn das abzutrennende Gas Kohlendioxid ist.

Als Gasgemisch kann grundsätzlich jedes Gasgemisch eingesetzt werden, das zumindest ein saures Gas enthält. Vorzugsweise stellt das Gasgemisch ein Erdölraffinat dar, also typischerweise ein Gasgemisch, das als Hauptkomponenten Kohlenwasserstoffe enthält. Weiterhin kann das Gasgemisch Rauchgas, Erdgas, Stadtgas oder Biogas sein. Es können auch Gemische solcher Gasgemische eingesetzt werden. Insbesondere ist bevorzugt, wenn das Gasgemisch neben dem zumindest einen sauren Gas zumindest weiterhin mindestens eines der Gase ausgewählt aus der Gruppe der Gase bestehend aus Methan, Ethan, n-Butan, i-Butan, Wasserstoff, Ethen, Ethin, Propen, Stickstoff, Sauerstoff, Helium, Neon, Argon und Krypton enthält.
Die Kohlendioxidabtrennung aus Rauchgas wird im Allgemeinen auch von Dan G. Chapel, Carl L. Mariz, John Emest, "Recovery of CO2 from Flue Gases: Commercial Trends", präsentiert auf dem "Canadian Society of Chemical Engineers annual meeting", Oktober 4-6, 1999, Saskatoon, Saskatchewan, Kanada, beschrieben.

In dem erfindungsgemäßen Verfahren sowie für das erfindungsgemäße metallorganische Gerüstmaterial kann zunächst ein im Grunde im Stand der Technik bekanntes metallorganisches Gerüstmaterial eingesetzt werden, das dann mit einem zur Gaswäsche geeigneten Amin imprägniert wird, bevor die Abtrennung erfolgt.

Solche metallorganischen Gerüstmaterialien (MOF) werden beispielsweise beschrieben in US-A 5,648,508, EP-A-0 790 253, M. O'Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023, DE-A-101 11 230, DE-A 10 2005 053430, WO-A 2007/054581, WO-A 2005/049892 und WO-A 2007/023134.

Als eine spezielle Gruppe dieser metallorganischen Gerüstmaterialien werden in der jüngsten Literatur so genannte "beschränkte" Gerüstmaterialien beschrieben, bei denen das Gerüst durch spezielle Wahl der organischen Verbindung sich nicht unendlich sondern unter Ausbildung von Polyedern erstreckt. A.C. Sudik, et al., J. Am. Chem. Soc. 127 (2005), 7110-7118, beschreiben solche speziellen Gerüstmaterialien. Hierbei werden diese zur Abgrenzung als metallorganische Polyeder (MOP = Metal-Organic Polyhedra) bezeichnet.

Eine weitere spezielle Gruppe von porösen metallorganischen Gerüstmaterialien sind solche, bei denen die organische Verbindung als Ligand ein mono-, bi- oder polycyclisches Ringsystem darstellt, das sich zumindest von einem der Heterocyclen ausgewählt aus der Gruppe bestehend aus Pyrrol, alpha-Pyridon und gamma-Pyridon ableitet und mindestens zwei Stickstoff-Ringatome aufweist. Die elektrochemische Herstellung solcher Gerüstmaterialien ist in WO-A 2007/131955 beschrieben.

Die generelle Eignung metallorganischer Gerüstmaterialien zur Aufnahme von Gasen und Flüssigkeiten ist beispielsweise in WO-A 2005/003622 und EP-A 1 702 925 beschrieben.

Insbesondere diese speziellen Gruppen sind im Rahmen der vorliegenden Erfindung geeignet.

Die metallorganischen Gerüstmaterialien gemäß der vorliegenden Erfindung enthalten Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1983), 603 - 619, insbesondere auf Seite 606 angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell (DIN 66131, 66134) für ein MOF in Pulverform (vor Imprägnierung) mehr als 100 m²/g, mehr bevorzugt über 300 m²/g, mehr bevorzugt mehr als 700 m²/g, weiter mehr bevorzugt mehr als 800 m²/g, weiter mehr bevorzugt mehr als 1000 m²/g und besonders bevorzugt mehr als 1200 m²/g.

Formkörper enthaltend metallorganische Gerüstmaterialien können eine niedrigere aktive Oberfläche besitzen; vorzugsweise jedoch (ohne Imprägnierung) mehr als 150 m²/g, mehr bevorzugt mehr als 300 m²/g, weiter mehr bevorzugt mehr als 700 m²/g.

Die Metallkomponente im Gerüstmaterial nach der vorliegenden Erfindung ist vorzugsweise ausgewählt aus den Gruppen la, IIa, IIIa, IVa bis VIIIa und Ib bis Vlb. Besonders bevorzugt sind Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, TI, Si, Ge, Sn, Pb, As, Sb und Bi, wobei Ln für Lanthanide steht.

Lanthanide sind La, Ce, Pr, Nd, Pm, Sm, En, Gd, Tb, Dy, Ho, Er, Tm, Yb.

In Bezug auf die Ionen dieser Elemente sind besonders zu erwähnen Mg²⁺, Ca²⁺, Sr²⁺, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, T1³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Weiterhin besonders bevorzugt sind Mg, Al, Y, Sc, Zr, Ti, V, Cr, Mo, Fe, Co, Cu, Ni, Mn, Zn, Ln. Weiter bevorzugt sind Al, Mo, Y, Sc, Mg, Fe, Cu, Mn und Zn. Insbesondere sind Sc, Al, Cu, Mn und Zn bevorzugt.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugten Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder -C(CN)₃ zu nennen.

Die funktionellen Gruppen können jedoch auch Heteroatome eines Heterocyclus sein. Insbesondere sind hierbei Stickstoffatome zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Mehr bevorzugt ist die mindestens zweizähnige organische Verbindung, ein aliphatischer oder aromatischer, acyclischer oder cyclischer Kohlenwasserstoff mit 1 bis 18, vorzugsweise 1 bis 10 und insbesondere 6 Kohlenstoffatomen, der zudem ausschließlich 2, 3 oder 4 Carboxylgruppen als funktionelle Gruppen aufweist.

Vorzugsweise leitet sich die mindestens eine mindestens zweizähnige organische Verbindung von einer Di-, Tri- oder Tetracarbonsäure ab.

Der Begriff "ableiten" bedeutet im Rahmen der vorliegenden Erfindung, dass die mindestens eine mindestens zweizähnige organische Verbindung in teilweise oder vollständig deprotonierter Form vorliegt. Weiterhin bedeutet der Begriff "ableiten", dass die mindestens eine mindestens zweizähnige organische Verbindung weitere Substituenten aufweisen kann. So kann eine Di-, Tri-, oder Tetracarbonsäure neben der Carbonsäurefunktionalität auch einen oder unabhängig voneinander mehrere Substituenten, wie Amino-, Hydroxyl, Methoxy, Halogen oder Methylgruppen, aufweisen. Vorzugsweise liegt kein weiterer Substituent oder nur eine Aminogruppe vor. Im Rahmen der vorliegenden Erfindung bedeutet der Begriff "ableiten" auch, dass die Carbonsäurefunktionalität als Schwefelanalogon vorliegen kann. Schwefelanaloga sind -C(=O)SH sowie deren Tautomer und -C(S)SH.

Beispielsweise leitet sich die mindestens zweizähnige organische Verbindung von einer Dicarbonsäure ab, wie etwa Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octandicarbonsäure, Pentan-3,3-carbonsäure, 4,4'-Diamino-1,1'-diphenyl-3,3'-dicarbonsäure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthra-chinon-2,4'-dicarbonsäure, Polytetrahydrofuran-250-dicarbonsäure, 1,4-Bis-(carboxy-methyl)-piperazin-2,3-dicarbonsäure, 7-Chlorchinolin-3,8-dicarbonsäure, 1-(4-Carboxy-phenyl)-3-(4-chlor-phenyl)-pyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxoimidazolidin-4,5-cis-dicarbonsäure, 2,2'-Bichinolin-4,4'-dicarbonsäure, Pyridin-3,4-dicarbonsäure, 3,6,9-Trioxaundecandicarbonsäure, Hydroxybenzophenondicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdümiddicarbonsäure, 4,4'-Diaminodiphenylmethandiimiddicarbonsäure, 4,4'-Diaminodiphenylsulfondümiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, . 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptandicarbonsäure, 5-Hydroxy-1,3-Benzoldicarbonsäure, 2,5-Dihydroxy-1,4-butandicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,

Weiterhin mehr bevorzugt handelt es sich bei der mindestens zweizähnigen organischen Verbindung um eine der oben beispielhaft genannten Dicarbonsäure als solche.

Beispielsweise kann sich die mindestens zweizähnige organische Verbindung von einer Tricarbonsäure ableiten, wie etwa

2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbon+säure, 1,2,3-Propantricarbonsäure oder Aurintricarbonsäure,

Weiterhin mehr bevorzugt ist die mindestens zweizähnige organische Verbindung einer der oben beispielhaft genannten Tricarbonsäuren als solche.

Beispiele für eine mindestens zweizähnige organische Verbindung, die sich von einer Tetracarbonsäure ableitet, sind

1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure.

Weiterhin mehr bevorzugt handelt es sich bei der mindestens zweizähnigen organischen Verbindung um eine der oben beispielhaft genannten Tetracarbonsäuren als solche.

Bevorzugte Heterocyclen als mindestens zweizähnige organische Verbindungen, bei denen eine koordinative Bindung über die Ringheteroatome erfolgt, sind die folgenden substituierten oder unsubstituierten Ringsysteme:

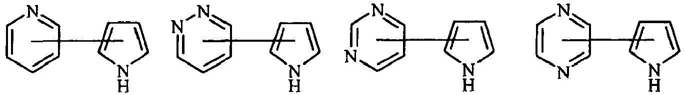

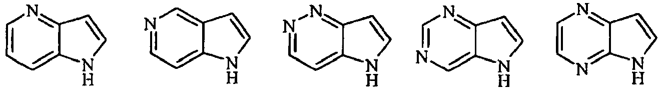

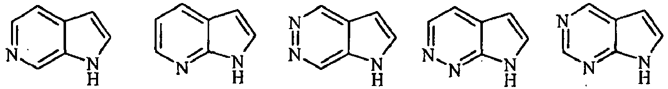

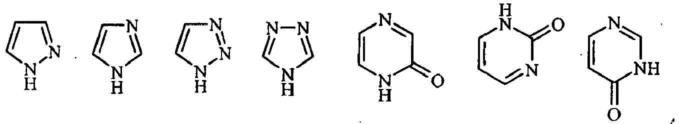

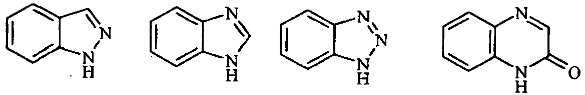

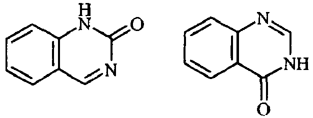

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Imidazolate, wie 2-Methylimidazolat, Acetylendicarbonsäure (ADC), Campherdicarbonsäure, Fumarsäure, Bernsteinsäure, Benzoldicarbonsäuren wie Phthalsäure, Isophthalsäure, Terephthalsäure (BDC), Aminoterephthaläure, Triethylendiamin (TE-DA), Naphthalindicarbonsäuren (NDC), Biphenyldicarbonsäuren wie beispielsweise 4,4'-Biphenyldicarbonsäure (BPDC), Pyrazindicarbonsäuren, w i e 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC), Tetrahydropyren-2,7-dicarbonsäure (HPDC), Biphenyltetracarbonsäure (BPTC), 1,3-Bis(4-pyridyl)propan (BPP) eingesetzt.

Ganz besonders bevorzugt werden unter anderem 2-Methylimidazol, 2-Ethylimidazol, Phthalsäure, Isophthalsäure, Terephthalsäure, 2,6-Naphthalindicarbonsäure, 1,4-Naphthalindicarbonsäure, 1,5-Naphthalindicarbonsäure, 1,2,3-Benzoltricarbonsäure, 1,2,4-Benzoltricarbonsäure, 1,3,5-Benzoltricarbonsäure, 1,2,4,5-Benzoltetracarbonsäure, AminoBDC, TEDA, Fumarsäure, Biphenyldicarboxylat, 1,5- und 2,6-Naphthalindicarbonsäure, tert.-Butylisophthalsäure, Dihydroxybenzoesäure, BTB, HPDC, BPTC, BPP.

Neben diesen mindestens zweizähnigen organischen Verbindungen kann das metallorganische Gerüstmaterial auch einen oder mehrere einzähnige Liganden und/oder einen oder mehrere mindestens zweizähnige Liganden, die sich nicht von einer Di-, Tri- oder Tetracarbonsäure ableiten, umfassen.

Geeignete Lösemittel zur Herstellung des metallorganischen Gerüstmaterials sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpyrrolidon, Ether, Acetonitril, Benzylchlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des metallorganischen Gerüstmaterials vor Imprägnierung kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem Formkörper enthaltend ein metallorganisches Gerüstmaterial vor Imprägnierung treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich oder bis zu 10 nm liegen. Die Porenverteilung kann mittels Quecksilber-Porosimetrie bestimmt werden.

Nachfolgend sind Beispiele für metallorganische Gerüstmaterialien angegeben, die einer nachfolgenden Imprägnierung unterzogen werden können. Neben der Kennzeichnung des Gerüstmaterials, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | **α** | **β** | **γ** | **a** | **b** | **c** | **Raumgruppe** |
|---|---|---|---|---|---|---|---|---|---|
| MOF-0 | Zn(NO₃)₂·6H₂O | Ethanol | 90 | 90 | 120 | 16.711 | 16.711 | 14.189 | P6(3)/ |
| | H₃(BTC) | | | | | | | | Mcm |
| MOF-2 | Zn(NO₃)₂·6H₂O (0.246 mmol) | DMF Toluen | 90 | 102.8 | 90 | 6.718 | 15.49 | 12.43 | P2(1)/n |
| | H₂(BDC) 0.241 mmol) | | | | | | | | |
| MOF-3 | Zn(NO₃)₂·6H₂O (1.89 mmol) | DMF MeOH | 99.72 | 111.11 | 108.4 | 9.726 | 9.911 | 10.45 | P-1 |
| | H₂(BDC) (1.93mmol) | | | | | | | | |
| MOF-4 | Zn(NO₃)₂·6H₂O (1.00 mmol) | Ethanol | 90 | 90 | 90 | 14.728 | 14.728 | 14.728 | P2(1)3 |
| | H₃(BTC) (0.5 mmol) | | | | | | | | |
| MOF-5 | Zn(NO₃)₂·6H₂O (2.22 mmol) | DMF Chlorbenzen | 90 | 90 | 90 | 25.669 | 25.669 | 25.669 | Fm-3m |
| | H₂(BDC) (2.17 mmol) | | | | | | | | |
| MOF-38 | Zn(NO₃)₂·6H₂O (0.27 mmol) H₃(BTC) (0.15 mmol) | H₃(BTC) (0.15 mmol) | 90 | 90 | 90 | 20.657 | 20.657 | 17.84 | I4cm |
| MOF-31 Zn(ADC)₂ | Zn(NO₃)₂·6H₂O 0.4 mmol | Ethanol | 90 | 90 | 90 | 10.821 | 10.821 | 10.821 | Pn(-3)m |
| | H₂(ADC) 0.8 mmol | | | | | | | | |
| MOF-12 Zn₂(ATC) | Zn(NO₃)₂·6H₂O 0.3 mmol | Ethanol | 90 | 90 | 90 | 15.745 | 16.907 | 18.167 | Pbca |
| | H₄(ATC) 0.15 mmol | | | | | | | | |
| MOF-20 ZnNDC | Zn(NO₃)₂·6H₂O 0.37 mmol | DMF Chlorbenzen | 90 | 92.13 | 90 | 8.13 | 16.444 | 12.807 | P2(1)/c |
| | H₂NDC 0.36 mmol | | | | | | | | |
| MOF-37 | Zn(NO₃)₂·6H₂O 0.2 mmol | DEF Chlorbenzen | 72.38 | 83.16 | 84.33 | 9.952 | 11.576 | 15.556 | P-1 |
| | H₂NDC 0.2 mmol | | | | | | | | |
| MOF-8 Tb₂ (ADC) | Tb(NO₃)₃·5H₂O 0.10 mmol | DMSO MeOH | 90 | 115.7 | 90 | 19.83 | 9.822 | 19.183 | C2/c |
| | H₂ADC 0.20 mmol | | | | | | | | |
| MOF-9 Tb₂ (ADC) | Tb(NO₃)₃·5H₂O 0.08 mmol | DMSO | 90 | 102.09 | 90 | 27.056 | 16.795 | 28.139 | C2/c |
| | H₂ADB 0.12 mmol | | | | | | | | |
| MOF-6 | Tb(NO₃)₃·5H₂O 0.30 mmol | DMF MeOH | 90 | 91.28 | 90 | 17.599 | 19.996 | 10.545 | P21/c |
| | H₂ (BDC) 0.30 mmol | | | | | | | | |
| MOF-7 | Tb(NO₃)₃·5H₂O 0.15 mmol | H₂O | 102.3 | 91.12 | 101.5 | 6.142 | 10.069 | 10.096 | P-1 |
| | H₂(BDC) 0.15 mmol | | | | | | | | |
| MOF-69A | Zn(NO₃)₂·6H₂O 0.083 mmol | DEF H₂O₂ | 90 | 111.6 | 90 | 23.12 | 20.92 | 12 | C2/c |
| | 4,4'BPDC 0.041 mmol | MeNH₂ | | | | | | | |
| MOF-69B | Zn(NO₃)₂·6H₂O 0.083 mmol | DEF H₂O₂ MeNH₂ | 90 | 95.3 | 90 | 20.17 | 18.55 | 12.16 | C2/c |
| | 2,6-NCD 0.041 mmol | | | | | | | | |
| MOF-11 Cu₂(ATC) | Cu(NO₃)₂·2.5H₂O 0.47 mmol | H₂O | 90 | 93.86 | 90 | 12.987 | 11.22 | 11.336 | C2/c |
| | H₂ATC 0.22 mmol | | | | | | | | |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol | H₂O DMF EtOH | 90 | 90 | 90 | 26.946 | 26.946 | 26.946 | Im-3 |
| | H₃BTB 0.052 mmol | | | | | | | | |
| MOF-32 Cd(ATC) | Cd(NO₃)₂·4H₂O 0.24 mmol | H₂O NaOH | 90 | 90 | 90 | 13.468 | 13.468 | 13.468 | P(-4)3m |
| | M₄ATC 0.10 mmol | | | | | | | | |
| MOF-33 Zn₂ (ATB) | ZnCl₂ 0.15 mmol | H₂O DMF EtOH | 90 | 90 | 90 | 19.561 | 15.255 | 23.404 | Imma |
| | H₄ATB 0.02 mmol | | | | | | | | |
| MOF-34 Ni(ATC) | Ni(NO₃)₂·6H₂O 0.24 mmol | H₂O NaOH | 90 | 90 | 90 | 10.066 | 11.163 | 19.201 | P2₁2₁2₁ |
| | H₄ATC 0.10 mmol | | | | | | | | |
| MOF-36 Zn₂ (MTB) | Zn(NO₃)₂·4H₂O 0.20 mmol | H₂O DMF | 90 | 90 | 90 | 15.745 | 16.907 | 18.167 | Pbca |
| | H₄MTB 0.04 mmol | | | | | | | | |
| MOF-39 Zn₃O(HBTB) | Zn(NO₃)₂4H₂O 0.27 mmol | H₂O DMF EtOH | 90 | 90 | 90 | 17.158 | 21.591 | 25.308 | Pnma |
| | H₃BTB 0.07 mmol | | | | | | | | |
| N0305 | FeCl₂·4H₂O 5.03 mmol | DMF | 90 | 90 | 120 | 8.2692 | 8.2692 | 63.566 | R-3c |
| | Ameisensre. 86.90 mmol | | | | | | | | |
| NO306A | FeCl₂·4H₂O 5.03 mmol | DEF | 90 | 90 | 90 | 9.9364 | 18.374 | 18.374 | Pbcn |
| | Ameisensre. 86.90 mmol | | | | | | | | |
| | | | | | | | | | |
| NO29 MOF-0 ähnlich | Mn(Ac)₂·4H₂O 0.46 mmol | DMF | 120 | 90 | 90 | 14.16 | 33.521 | 33.521 | P-1 |
| | H₃BTC 0.69 mmol | | | | | | | | |
| BPR48 A2 | Zn(NO₃)₂6H₂O 0.012 mmol | DMSO Toluen | 90 | 90 | 90 | 14.5 | 17.04 | 18.02 | Pbca |
| | H₂BDC 0.012 mmol | | | | | | | | |
| BPR69 B1 | Cd(N0₃)₂4H₂O 0.0212 mmol | DMSO | 90 | 98.76 | 90 | 14.16 | 15.72 | 17.66 | Cc |
| | H₂BDC 0.0428 mmol | | | | | | | | |
| BPR92 A2 | Co(NO₃)₂·6H₂O 0.018 mmol | NMP | 106.3 | 107.63 | 107.2 | 7.5308 | 10.942 | 11.025 | P1 |
| | H₂BDC 0.018 mmol | | | | | | | | |
| BPR95 C5 | Cd(NO₃)₂4H₂O 0.012 mmol | NMP | 90 | 112.8 | 90 | 14.460 | 11.085 | 15.829 | P2(1)/n |
| | H₂BDC 0.36 mmol | | | | | | | | |
| Cu C₆H₄O₆ | Cu(NO₃)₂·2.5H₂O 0.370 mmol | DMF Chlorbenzen | 90 | 105.29 | 90 | 15.259 | 14.816 | 14.13 | P2(1)/c |
| | H₂BDC(OH)₂ 0.37 mmol | | | | | | | | |
| M(BTC) MOF-0 ähnlich | Co(SO₄)H₂O 0.055 mmol | DMF | wie MOF-0 | | | | | | |
| | H₃BTC 0.037 mmol | | | | | | | | |
| Tb(C₆H₄O₆) | Tb(NO₃)₃·5H₂O 0.370 mmol | DMF Chlorbenzen | 104.6 | 107.9 | 97.147 | 10.491 | 10.981 | 12.541 | P-1 |
| | H₂(C₆H₄O₆) 0.56 mmol | | | | | | | | |
| Zn (C₂O₄) | ZnCl₂ 0.370 mmol | DMF Chlorbenzen | 90 | 120 | 90 | 9.4168 | 9.4168 | 8.464 | P(-3)1 m |
| | Oxalsäure 0.37 mmol | | | | | | | | |
| Co(CHO) | Co(NO₃)₂·5H₂O 0.043 mmol | DMF | 90 | 91.32 | 90 | 11.328 | 10.049 | 14.854 | P2(1)/n |
| | Ameisensre. 1.60 mmol | | | | | | | | |
| Cd(CHO) | Cd(NO₃)₂·4H₂O 0.185 mmol | DMF | 90 | 120 | 90 | 8.5168 | 8.5168 | 22.674 | R-3c |
| | formic acid 0.185 mmol | | | | | | | | |
| Cu(C₃H₂O₄) | Cu(NO₃)₂·2.5H₂O 0.043 mmol | DMF | 90 | 90 | 90 | 8.366 | 8.366 | 11.919 | P43 |
| | Malonsre. 0.192 mmol | | | | | | | | |
| Zn₆ (NDC)₅ MOF-48 | Zn(NO₃)₂·6H₂O 0.097 mmol | DMF Chlorbenzen H₂O₂ | 90 | 95.902 | 90 | 19.504 | 16.482 | 14.64 | C2/m |
| | 14 NDC 0.069 mmol | | | | | | | | |
| | | | | | | | | | |
| MOF-47 | Zn(NO₃)₂6H₂O 0.185 mmol | DMF Chlorbenzen H₂O₂ | 90 | 92.55 | 90 | 11.303 | 16.029 | 17.535 | P2(1)/c |
| | H₂(BDC[CH₃]₄) 0.185 mmol | | | | | | | | |
| MO25 | Cu(NO₃)₂·2.5H₂O 0.084 mmol BPhDC 0.085 mmol | DMF | 90 | 112.0 | 90 | 23.880 | 16.834 | 18.389 | P2(1)/c |
| Cu-Thio | Cu(NO₃)₂·2.5H₂O 0.084 mmol | DEF | 90 | 113.6 | 90 | 15.4747 | 14.514 | 14.032 | P2(1)/c |
| | Thiophen Dicarbonsre. 0.085 mmol | | | | | | | | |
| CIBDC1 | Cu(NO₃)₂·2.5H₂O0. 084 mmol | DMF | 90 | 105.6 | 90 | 14.911 | 15.622 | 18.413 | C2/c |
| | H₂(BDCCl₂) 0.085 mmol | | | | | | | | |
| MOF-101 | Cu(NO₃)₂·2.5H₂O 0.084 mmol | DMF | 90 | 90 | 90 | 21.607 | 20.607 | 20.073 | Fm3m |
| | BrBDC 0.085 mmol | | | | | | | | |
| Zn₃(BTC)₂ | ZnCl₂ 0.033 mmol | DMF EtOH Base zugegeben | 90 | 90 | 90 | 26.572 | 26.572 | 26.572 | Fm-3m |
| | H₃BTC 0.033 mmol | | | | | | | | |
| MOF-j | Co(CH₃CO₂)₂·4H₂ O (1.65 mmol) | H₂O | 90 | 112.0 | 90 | 17.482 | 12.963 | 6.559 | C2 |
| | H₃(BZC) (0.95 mmol) | | | | | | | | |
| MOF-n | Zn(NO₃)₂·6H₂O | Ethanol | 90 | 90 | 120 | 16.711 | 16.711 | 14.189 | P6(3)/mcm |
| | H₃(BTC) | | | | | | | | |
| PbBDC | Pb(NO₃)₂ (0.181 mmol) | DMF Ethanol | 90 | 102.7 | 90 | 8.3639 | 17.991 | 9.9617 | P2(1)/n |
| | H₂(BDC) (0.181 mmol) | | | | | | | | |
| Znhex | Zn(NO₃)₂·6H₂O (0.171 mmol) | DMF p-Xylen Ethanol | 90 | 90 | 120 | 37.1165 | 37.117 | 30.019 | P3(1)c |
| | H₃BTB (0.114 mmol) | | | | | | | | |
| AS16 | FeBr₂ 0.927 mmol | DMF anhydr. | 90 | 90.13 | 90 | 7.2595 | 8.7894 | 19.484 | P2(1)c |
| | H₂(BDC) 0.927 mmol | | | | | | | | |
| AS27-2 | FeBr₂ 0.927 mmol | DMF anhydr. | 90 | 90 | 90 | 26.735 | 26.735 | 26.735 | Fm3m |
| | H₃(BDC) 0.464 mmol | | | | | | | | |
| AS32 | FeCl₃ 1.23 mmol | DMF anhydr. Ethanol | 90 | 90 | 120 | 12.535 | 12.535 | 18.479 | P6(2)c |
| | H₂(BDC) 1.23 mmol | | | | | | | | |
| AS54-3 | FeBr₂ 0.927 | DMF anhydr. n-Propanol | 90 | 109.98 | 90 | 12.019 | 15.286 | 14.399 | C2 |
| | BPDC 0.927 mmol | | | | | | | | |
| AS61-4 | FeBr₂ 0.927 mmol | Pyridin anhydr. | 90 | 90 | 120 | 13.017 | 13.017 | 14.896 | P6(2)c |
| | m-BDC 0.927 mmol | | | | | | | | |
| AS68-7 | FeBr₂ 0.927 mmol | DMF anhydr. Pyridin | 90 | 90 | 90 | 18.340 7 | 10.036 | 18.039 | Pca2₁ |
| | m-BDC 1.204 mmol | | | | | | | | |
| Zn(ADC) | Zn(NO₃)₂·6H₂O 0.37 mmol | DMF Chlorbenzen | 90 | 99.85 | 90 | 16.764 | 9.349 | 9.635 | C2/c |
| | H₂(ADC) 0.36 mmol | | | | | | | | |
| MOF-12 Zn₂ (ATC) | Zn(NO₃)₂·6H₂O 0.30 mmol | Ethanol | 90 | 90 | 90 | 15.745 | 16.907 | 18.167 | Pbca |
| | H₄(ATC) 0.15 mmol | | | | | | | | |
| MOF-20 ZnNDC | Zn(NO₃)₂·6H₂O 0.37 mmol | DMF Chlorbenzen | 90 | 92.13 | 90 | 8.13 | 16.444 | 12.807 | P2(1)/c |
| | H₂NDC 0.36 mmol | | | | | | | | |
| MOF-37 | Zn(NO₃)₂·6H₂O 0.20 mmol | DEF Chlorbenzen | 72.38 | 83.16 | 84.33 | 9.952 | 11.576 | 15.556 | P-1 |
| | H₂NDC 0.20 mmol | | | | | | | | |
| Zn(NDC) | Zn(NO₃)₂·6H₂O | DMSO | 68.08 | 75.33 | 88.31 | 8.631 | 10.207 | 13.114 | P-1 |
| (DMSO) | H₂NDC | | | | | | | | |
| Zn(NDC) | Zn(NO₃)₂·6H₂O | | 90 | 99.2 | 90 | 19.289 | 17.628 | 15.052 | C2/c |
| | H₂NDC | | | | | | | | |
| Zn(HPDC) | Zn(NO₃)₂·4H₂O 0.23 mmol | DMF H₂O | 107.9 | 105.06 | 94.4 | 8.326 | 12.085 | 13.767 | P-1 |
| | H₂(HPDC) 0.05 mmol | | | | | | | | |
| Co(HPDC) | Co(NO₃)₂·6H₂O 0.21 mmol | DMF H₂O/ Ethanol | 90 | 97.69 | 90 | 29.677 | 9.63 | 7.981 | C2/c |
| | H₂ (HPDC) 0.06 mmol | | | | | | | | |
| Zn₃(PDC)2.5 | Zn(NO₃)₂·4H₂O 0.17 mmol | DMF/ CIBz H₂0/ TEA | 79.34 | 80.8 | 85.83 | 8.564 | 14.046 | 26.428 | P-1 |
| | H₂(HPDC) 0.05 mmol | | | | | | | | |
| Cd₂ (TPDC)2 | Cd(NO₃)₂·4H₂O 0.06 mmol | Methanol/ CHP H₂O | 70.59 | 72.75 | 87.14 | 10.102 | 14.412 | 14.964 | P-1 |
| | H₂(HPDC) 0.06 mmol | | | | | | | | |
| Tb(PDC)1.5 | Tb(NO₃)₃·5H₂O 0.21 mmol | DMF H₂O/ Ethanol | 109.8 | 103.61 | 100.14 | 9.829 | 12.11 | 14.628 | P-1 |
| | H₂(PDC) 0.034 mmol | | | | | | | | |
| | | | | | | | | | |
| ZnDBP | Zn(NO₃)₂·6H₂O 0.05 mmol | MeOH | 90 | 93.67 | 90 | 9.254 | 10.762 | 27.93 | P2/n |
| | Dibenzylphosphat 0.10 mmol | | | | | | | | |
| Zn₃(BPDC) | ZnBr₂ 0.021 mmol | DMF | 90 | 102.76 | 90 | 11.49 | 14.79 | 19.18 | P21/n |
| | 4,4'BPDC 0.005 mmol | | | | | | | | |
| CdBDC | Cd(NO₃)₂·4H₂O 0.100 mmol | DMF Na₂SiO ₃ (aq) | 90 | 95.85 | 90 | 11.2 | 11.11 | 16.71 | P21/n |
| | H₂(BDC) 0.401 mmol | | | | | | | | |
| Cd-mBDC | Cd(NO₃)₂·4H₂O 0.009 mmol | DMF MeNH₂ | 90 | 101.1 | 90 | 13.69 | 18.25 | 14.91 | C2/c |
| | H₂(mBDC) 0.018 mmol | | | | | | | | |
| Zn₄OBND C | Zn(NO₃)₂·6H₂O | DEF MeNH₂ H₂O₂ | 90 | 90 | 90 | 22.35 | 26.05 | 59.56 | Fmmm |
| | 0.041 mmol BNDC | | | | | | | | |
| Eu(TCA) | Eu(NO₃)₃·6H₂O 0.14 mmol | DMF Chlorbenzen | 90 | 90 | 90 | 23.325 | 23.325 | 23.325 | Pm-3n |
| | TCA 0.026 mmol | | | | | | | | |
| Tb(TCA) | Tb(NO₃)₃·6H₂O 0.069 mmol | DMF Chlorbenzen | 90 | 90 | 90 | 23.272 | 23.272 | 23.372 | Pm-3n |
| | TCA 0.026 mmol | | | | | | | | |
| Formate | Ce(NO₃)₃·6H₂O 0.138 mmol | H₂O Ethanol | 90 | 90 | 120 | 10.668 | 10.667 | 4.107 | R-3m |
| | Ameisensre. 0.43 mmol | | | | | | | | |
| | FeCl₂·4H₂O 5.03 mmol | DMF | 90 | 90 | 120 | 8.2692 | 8.2692 | 63.566 | R-3c |
| | Ameisensre. 86.90 mmol | | | | | | | | |
| | FeCl₂·4H₂O 5.03 mmol Ameisensre. 86.90 mmol | DEF | 90 | 90 | 90 | 9.9364 | 18.374 | 18.374 | Pbcn |
| | FeCl₂·4H₂O 5.03 mmol | DEF | 90 | 90 | 90 | 8.335 | 8.335 | 13.34 | P-31c |
| | Ameisensre. 86.90 mmol | | | | | | | | |
| NO330 | FeCl_{2˙}4H₂O 0.50 mmol | Formamid | 90 | 90 | 90 | 8.7749 | 11.655 | 8.3297 | Pnna |
| | Ameisensre. 8.69 mmol | | | | | | | | |
| NO332 | FeCl₂·4H₂O 0.50 mmol | DIP | 90 | 90 | 90 | 10.0313 | 18.808 | 18.355 | Pbcn |
| | Ameisensre. 8.69 mmol | | | | | | | | |
| | | | | | | | | | |
| NO333 | FeCl₂·4H₂O 0.50 mmol | DBF | 90 | 90 | 90 | 45.2754 | 23.861 | 12.441 | Cmcm |
| | Ameisensre. 8.69 mmol | | | | | | | | |
| NO335 | FeCl₂·4H₂O 0.50 mmol | CHF | 90 | 91.372 | 90 | 11.5964 | 10.187 | 14.945 | P21/n |
| | Ameisensre. 8.69 mmol | | | | | | | | |
| NO336 | FeCl₂·4H₂O 0.50 mmol | MFA | 90 | 90 | 90 | 11.7945 | 48.843 | 8.4136 | Pbcm |
| | Ameisensre. 8.69 mmol | | | | | | | | |
| NO13 | Mn(Ac)₂·4H₂O 0.46 mmol | Ethanol | 90 | 90 | 90 | 18.66 | 11.762 | 9.418 | Pbcn |
| | Benzoesre. 0.92 mmol | | | | | | | | |
| | Bipyridin 0.46 mmol | | | | | | | | |
| NO29 MOF-0 ähnlich | Mn(Ac)₂·4H₂O 0.46 mmol | DMF | 120 | 90 | 90 | 14.16 | 33.521 | 33.521 | P-1 |
| | H₃BTC 0.69 mmol | | | | | | | | |
| Mn(hfac)₂ (O₂CC₆H₅) | Mn(Ac)₂·4H₂O 0.46 mmol | Ether | 90 | 95.32 | 90 | 9.572 | 17.162 | 14.041 | C2/c |
| | Hfac 0.92 mmol | | | | | | | | |
| | Bipyridin 0.46 mmol | | | | | | | | |
| BPR43G2 | Zn(NO₃)₂·6H₂O 0.0288 mmol | DMF CH₃CN | 90 | 91.37 | 90 | 17.96 | 6.38 | 7.19 | C2/c |
| | H₂BDC 0.0072 mmol | | | | | | | | |
| BPR48A2 | Zn(NO₃)₂6H₂O 0.012 mmol | DMSO Toluen | 90 | 90 | 90 | 14.5 | 17.04 | 18.02 | Pbca |
| | H₂BDC 0.012 mmol | | | | | | | | |
| BPR49B1 | Zn(NO₃)₂ 6H₂O 0.024 mmol | DMSO Methanol | 90 | 91.172 | 90 | 33.181 | 9.824 | 17.884 | C2/c |
| | H₂BDC 0.048 mmol | | | | | | | | |
| BPR56E1 | Zn(NO₃)₂ 6H₂O 0.012 mmol | DMSO n-Propanol | 90 | 90.096 | 90 | 14.5873 | 14.153 | 17.183 | P2(1)/n |
| | H₂BDC 0.024 mmol | | | | | | | | |
| BPR68D10 | Zn(NO₃)₂ 6H₂O 0.0016 mmol | DMSO Benzen | 90 | 95.316 | 90 | 10.0627 | 10.17 | 16.413 | P2(1)/c |
| | H₃BTC 0.0064 mmol | | | | | | | | |
| BPR69B1 | Cd(NO₃)₂4H₂O 0.0212 mmol | DMSO | 90 | 98.76 | 90 | 14.16 | 15.72 | 17.66 | Cc |
| | H₂BDC 0.0428 mmol | | | | | | | | |
| | | | | | | | | | |
| BPR73E4 | Cd(NO₃)₂ 4H₂O 0.006 mmol | DMSO Toluen | 90 | 92.324 | 90 | 8.7231 | 7.0568 | 18.438 | P2(1)/n |
| | H₂BDC 0.003 mmol | | | | | | | | |
| BPR76D5 | Zn(NO₃)₂6H₂O 0.0009 mmol | DMSO | 90 | 104.17 | 90 | 14.4191 | 6.2599 | 7.0611 | Pc |
| | H₂BzPDC 0.0036 mmol | | | | | | | | |
| BPR80B5 | Cd(NO₃)₂·4H₂O 0.018 mmol | DMF | 90 | 115.11 | 90 | 28.049 | 9.184 | 17.837 | C2/c |
| | H₂BDC 0.036 mmol | | | | | | | | |
| BPR80H5 | Cd(NO₃)₂ 4H₂O 0.027 mmol | DMF | 90 | 119.06 | 90 | 11.4746 | 6.2151 | 17.268 | P2/c |
| | H₂BDC 0.027 mmol | | | | | | | | |
| BPR82C6 | Cd(NO₃)₂ 4H₂O 0.0068 mmol | DMF | 90 | 90 | 90 | 9.7721 | 21.142 | 27.77 | Fdd2 |
| | H₂BDC 0.202 mmol | | | | | | | | |
| BPR86C3 | Co(NO₃)₂ 6H₂O 0.0025 mmol | DMF | 90 | 90 | 90 | 18.3449 | 10.031 | 17.983 | Pca2(1) |
| | H₂BDC 0.075 mmol | | | | | | | | |
| BPR86H6 | Cd(NO₃)₂·6H₂O 0.010 mmol | DMF | 80.98 | 89.69 | 83.41 2 | 9.8752 | 10.263 | 15.362 | P-1 |
| | H₂BDC 0.010 mmol | | | | | | | | |
| | Co(NO₃)₂6H₂O | NMP | 106.3 | 107.63 | 107.2 | 7.5308 | 10.942 | 11.025 | P1 |
| BPR95A2 | Zn(NO₃)₂ 6H₂O 0.012 mmol | NMP | 90 | 102.9 | 90 | 7.4502 | 13.767 | 12.713 | P2(1)/c |
| | H₂BDC 0.012 mmol | | | | | | | | |
| CuC₆F₄O₄ | Cu(NO₃)₂·2.5H₂O 0.370 mmol | DMF Chlorbenzen | 90 | 98.834 | 90 | 10.9675 | 24.43 | 22.553 | P2(1)/n |
| | H₂BDC(OH) ₂ 0.37 mmol | | | | | | | | |
| Fe Formic | FeCl₂·4H₂O 0.370 mmol | DMF | 90 | 91.543 | 90 | 11.495 | 9.963 | 14.48 | P2(1)/n |
| | Ameisensre. 0.37 mmol | | | | | | | | |
| Mg Formic | Mg(NO₃)₂·6H₂O 0.370 mmol | DMF | 90 | 91.359 | 90 | 11.383 | 9.932 | 14.656 | P2(1)/n |
| | Ameisensre. 0.37 mmol | | | | | | | | |
| MgC₆H₄O₆ | Mg(NO₃)₂·6H₂O 0.370 mmol | DMF | 90 | 96.624 | 90 | 17.245 | 9.943 | 9.273 | C2/c |
| | H₂BDC(OH)₂ 0.37 mmol | | | | | | | | |
| Zn C₂H₄BDC MOF-38 | ZnCl₂ 0.44 mmol | DMF | 90 | 94.714 | 90 | 7.3386 | 16.834 | 12.52 | P2(1)/n |
| | CBBDC 0.261 mmol | | | | | | | | |
| MOF-49 | ZnCl₂ 0.44 mmol | DMF CH₃CN | 90 | 93.459 | 90 | 13.509 | 11.984 | 27.039 | P2/c |
| | m-BDC 0.261 mmol | | | | | | | | |
| MOF-26 | Cu(NO₃)₂·5H₂O 0.084 mmol | DMF | 90 | 95.607 | 90 | 20.8797 | 16.017 | 26.176 | P2(1)/n |
| | DCPE 0.085 mmol | | | | | | | | |
| | | | | | | | | | |
| MOF-112 | Cu(NO₃)₂·2.5H₂O 0.084 mmol | DMF Ethanol | 90 | 107.49 | 90 | 29.3241 | 21.297 | 18.069 | C2/c |
| | o-Br-*m*-BDC 0.085 mmol | | | | | | | | |
| MOF-109 | Cu(NO₃)₂·2.5H₂O 0.084 mmol | DMF | 90 | 111.98 | 90 | 23.8801 | 16.834 | 18.389 | P2(1)/c |
| | KDB 0.085 mmol | | | | | | | | |
| MOF-111 | Cu(NO₃)₂·2.5H₂O 0.084 mmol | DMF Ethanol | 90 | 102.16 | 90 | 10.6767 | 18.781 | 21.052 | C2/c |
| | o-BrBDC 0.085 mmol | | | | | | | | |
| MOF-110 | Cu(NO₃)₂·2.5H₂O 0.084 mmol | DMF | 90 | 90 | 120 | 20.0652 | 20.065 | 20.747 | R-3/m |
| | Thiophen Dicarbonsre. 0.085 mmol | | | | | | | | |
| MOF-107 | Cu(NO₃)₂·2.5H₂O 0.084 mmol | DEF | 104.8 | 97.075 | 95.206 | 11.032 | 18.067 | 18.452 | P-1 |
| | Thiophen Dicarbonsre. 0.085 mmol | | | | | | | | |
| MOF-108 | Cu(NO3)2·2.5H2O 0.084 mmol | DBF/ Methanol | 90 | 113.63 | 90 | 15.4747 | 14.514 | 14.032 | C2/c |
| | Thiophen Dicarbonsre. 0.085 mmol | | | | | | | | |
| MOF-102 | Cu(NO3)2·2.5H2O 0.084 mmol | DMF | 91.63 | 106.24 | 112.01 | 9.3845 | 10.794 | 10.831 | P-1 |
| | H2(BDCCl2) 0.085 mmol | | | | | | | | |
| Clbdc1 | Cu(NO3)2·2.5H2O 0.084 mmol | DEF | 90 | 105.56 | 90 | 14.911 | 15.622 | 18.413 | P-1 |
| | H2(BDCCl2) 0.085 mmol | | | | | | | | |
| Cu(NMOP) | Cu(NO3)2·2.5H2O 0.084 mmol | DMF | 90 | 102.37 | 90 | 14.9238 | 18.727 | 15.529 | P2(1)/m |
| | NBDC 0.085 mmol | | | | | | | | |
| Tb(BTC) | Tb(NO3)3·5H2O 0.033 mmol | DMF | 90 | 106.02 | 90 | 18.6986 | 11.368 | 19.721 | |
| | H3BTC 0.033 mmol | | | | | | | | |
| Zn3(BTC)2 Honk | ZnCl2 0.033 mmol | DMF Ethanol | 90 | 90 | 90 | 26.572 | 26.572 | 26.572 | Fm-3m |
| | H3BTC 0.033 mmol | | | | | | | | |
| Zn4O(NDC) | Zn(NO3)2·4H2O 0.066 mmol | DMF Ethanol | 90 | 90 | 90 | 41.5594 | 18.818 | 17.574 | aba2 |
| | 14NDC 0.066 mmol | | | | | | | | |
| CdTDC | Cd(NO3)2·4H2O 0.014 mmol | DMF H2O | 90 | 90 | 90 | 12.173 | 10.485 | 7.33 | Pmma |
| | Thiophen 0.040 mmol | | | | | | | | |
| | DABCO 0.020 mmol | | | | | | | | |
| IRMOF-2 | Zn(NO3)2·4H2O 0.160 mmol | DEF | 90 | 90 | 90 | 25.772 | 25.772 | 25.772 | Fm-3m |
| | o-Br-BDC 0.60 mmol | | | | | | | | |
| IRMOF-3 | Zn(NO3)2·4H2O | DEF | 90 | 90 | 90 | 25.747 | 25.747 | 25.747 | Fm-3m |
| | 0.20 mmol | Ethanol | | | | | | | |
| | H2N-BDC 0.60 mmol | | | | | | | | |
| IRMOF-4 | Zn(NO3)2·4H2O 0.11 mmol | DEF | 90 | 90 | 90 | 25.849 | 25.849 | 25.849 | Fm-3m |
| | [C3H70]2-BDC 0.48 mmol | | | | | | | | |
| IRMOF-5 | Zn(NO3)2·4H2O 0.13 mmol | DEF | 90 | 90 | 90 | 12.882 | 12.882 | 12.882 | Pm-3m |
| | [C5H11O]2-BDC 0.50 mmol | | | | | | | | |
| IRMOF-6 | Zn(NO3)2·4H2O 0.20 mmol | DEF | 90 | 90 | 90 | 25.842 | 25.842 | 25.842 | Fm-3m |
| | [C2H4]-BDC 0.60 mmol | | | | | | | | |
| IRMOF-7 | Zn(NO3)2·4H2O 0.07 mmol | DEF | 90 | 90 | 90 | 12.914 | 12.914 | 12.914 | Pm-3m |
| | 1,4NDC 0.20 mmol | | | | | | | | |
| IRMOF-8 | Zn(NO3)2·4H2O 0.55 mmol | DEF | 90 | 90 | 90 | 30.092 | 30.092 | 30.092 | Fm-3m |
| | 2,6NDC 0.42 mmol | | | | | | | | |
| IRMOF-9 | Zn(NO3)2·4H2O 0.05 mmol | DEF | 90 | 90 | 90 | 17.147 | 23.322 | 25.255 | Pnnm |
| | BPDC 0.42 mmol | | | | | | | | |
| IRMOF-10 | Zn(NO3)2·4H2O 0.02 mmol | DEF | 90 | 90 | 90 | 34.281 | 34.281 | 34.281 | Fm-3m |
| | BPDC 0.012 mmol | | | | | | | | |
| IRMOF-11 | Zn(NO3)2·4H2O 0.05 mmol | DEF | 90 | 90 | 90 | 24.822 | 24.822 | 56.734 | R-3m |
| | HPDC 0.20 mmol | | | | | | | | |
| IRMOF-12 | Zn(NO3)2·4H2O 0.017 mmol | DEF | 90 | 90 | 90 | 34.281 | 34.281 | 34.281 | Fm-3m |
| | HPDC 0.12 mmol | | | | | | | | |
| | | | | | | | | | |
| IMOF-13 | Zn(NO₃)₂·4H₂O 0.048 mmol | DEF | 90 | 90 | 90 | 24.822 | 24.822 | 56.734 | R-3m |
| | PDC 0.31 mmol | | | | | | | | |
| IRMOF-14 | Zn(NO₃)₂·4H₂O 0.17 mmol | DEF | 90 | 90 | 90 | 34.381 | 34.381 | 34.381 | Fm-3m |
| | PDC 0.12 mmol | | | | | | | | |
| IRMOF-15 | Zn(NO₃)₂·4H₂O 0.063 mmol | DEF | 90 | 90 | 90 | 21.459 | 21.459 | 21.459 | Im-3m |
| | TPDC 0.025 mmol | | | | | | | | |
| IRMOF-16 | Zn(NO₃)₂·4H₂O 0.0126 mmol | DEF NMP | 90 | 90 | 90 | 21.49 | 21.49 | 21.49 | Pm-3m |
| | TPDC 0.05 mmol | | | | | | | | |

| | | | | | | | | | |
|---|---|---|---|---|---|---|---|---|---|
| ADC Acetylenedicarbonsäure NDC Naphtalindicarbonsäure BDC Benzoldicarbonsäure ATC Adamantantetracarbonsäure BTC Benzoltricarbonsäure BTB Benzoltribenzoesäure MTB Methantetrabenzoesäure ATB Adamantantetrabenzoesäure ADB Adamantandibenzoesäure | | | | | | | | | |

Weitere metallorganische Gerüstmaterialien sind MOF-2 bis 4, MOF-9, MOF-31 bis 36, MOF-39, MOF-69 bis 80, MOF103 bis 106, MOF-122, MOF-125, MOF-150, MOF-177, MOF-178, MOF-235, MOF-236, MOF-500, MOF-501, MOF-502, MOF-505, IRMOF-1, IRMOF-61, IRMOP-13, IRMOP-51, MIL-17, MIL-45, MIL-47, MIL-53, MIL-59, MIL-60, MIL-61, MIL-63, MIL-68, MIL-79, MIL-80, MIL-83, MIL-85, CPL-1 bis 2, SZL-1 welche in der Literatur beschrieben sind.

Besonders bevorzugte metallorganische Gerüstmaterialien sind MIL-53, Zn-tBuisophthalsäure, Al-BDC, MOF-5, MOF-177, MOF-505, IRMOF-8, IRMOF-11, Cu-BTC, Al-NDC, Al-AminoBDC, Cu-BDC-TEDA, Zn-BDC-TEDA, Al-BTC, Cu-BTC, Al-NDC, Mg-NDC, Al-Fumarat, Zn-2-Methylimidazolat, Zn-2-Aminoimidazolat, Cu-Biphenyldicarboxylat-TEDA, MOF-74, Cu-BPP, Sc-Terephthalat. Weiter mehr bevorzugt sind Sc-Terephthalat, AI-BDC und Al-BTC.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf die DE-A 103 55 087 sowie WO-A 2005/049892 verwiesen. Die auf diesem Weg hergestellten metallorganischen Gerüstmaterialien weisen besonders gute Eigenschaften in Zusammenhang mit der Adsorption und Desorption von chemischen Stoffen, insbesondere von Gasen.

Unabhängig von dessen Herstellung fällt das metallorganische Gerüstmaterial in pulverförmiger bzw. kristalliner Form an. Dieses kann als solches als Sorptionsmittel alleine oder zusammen mit anderen Sorbentien oder weiteren Materialien eingesetzt werden. Vorzugsweise geschieht dies als Schüttgut. Weiterhin kann das metallorganische Gerüstmaterial in einen Formkörper umgewandelt werden. Bevorzugte Verfahren sind hierbei die Verstrangung oder Tablettierung. Bei der Formkörperherstellung können zum metallorganischen Gerüstmaterial weitere Materialien, wie beispielsweise Binder, Gleitmittel oder andere Additive hinzugesetzt werden. Ebenso ist es denkbar, dass Mischungen von Gerüstmaterial und anderen Adsorbentien beispielsweise Aktivkohle als Formkörper hergestellt werden oder getrennt Formkörper ergeben, die dann als Formkörpermischungen eingesetzt werden.

Hinsichtlich der möglichen Geometrien dieser Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Vorzugsweise liegt das metallorganische Gerüstmaterial als Formkörper vor. Bevorzugte Ausgestaltungen sind Tabletten sowie strangförmige Extrudate. Die Formkörper erstrecken sich vorzugsweise in mindestens eine Dimension des Raumes im Bereich von 0,2 mm bis 30 mm, weiter bevorzugt von 0,5 mm bis 5 mm, insbesondere von 1 mm bis 3 mm.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; optional Waschen und/oder Trocknen und/oder Calcinieren des Extrudates; optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300°C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300°C, bevorzugt im Bereich von 50 bis 300°C und besonders bevorzugt im Bereich von 100 bis 300°C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Um das poröse metallorganische Gerüstmaterial zu imprägnieren, bringt man dieses mit dem zu einer Gaswäsche geeigneten Amin in Kontakt. Selbstverständlich können auch mehrere Amine verwendet werden. Typischerweise liegt das Amin hierbei in flüssiger Form vor und wird von dem porösen metallorganischen Gerüstmaterial aufgenommen, ohne dass eine anschließende Trocknung erforderlich wäre. Sofern das Amin in flüssiger Form mit dem Gerüstmaterial in Kontakt gebracht wird, kann dies in reiner Form, als Mischung verschiedener Amine oder in gelöster Form, insbesondere als wässrige Lösung, erfolgen. Sofern eine Lösung verwendet wird, können hier auch mehrere Amine in einer Lösung vorliegen. Ebenso können mehrere Lösungen eingesetzt werden. Das Amin kann jedoch auch in gasförmigem Zustand mit dem metallorganischen Gerüstmaterial in Kontakt gebracht werden.

Der.Anteil an Amin in Bezug auf das metallorganische Gerüstmaterial kann variiert werden und liegt im Bereich von 1 bis 100 mmol Amin pro g Gerüstmaterial, und häufig im Bereich von 1 bis 25 mmol Amin pro g Gerüstmaterial.

Nach dem Imprägnieren des porösen metallorganischen Gerüstmaterials mit dem zur Gaswäsche geeigneten Amin weist das Gerüstmaterial typischerweise eine wesentlich geringere spezifische Oberfläche auf. Dies kann damit begründet werden, dass das aufgenommene Amin die Poren zumindest teilweise belegt, so dass eine geringere Porosität ermittelt wird.

Amine, die zur Gaswäsche geeignet sind, sind im Stand der Technik bekannt. Allgemein kann ein Amin der Formel R¹N(R²)R³ mit R¹, R², R³ unabhängig voneinander Wasserstoff oder einen verzweigten oder unverzweigten Alkylrest mit 1 bis 12 Kohlenstoffatomen darstellen, wobei der Alkylrest eine Kohlenstoffkette aufweist, die durch - O- oder N(R⁴) gegebenenfalls mehrfach unterbrochen sein kann und der Alkylrest unsubstituiert oder mit OH oder NH₂ gegebenenfalls mehrfach substituiert sein kann, wobei R⁴ Wasserstoff oder einen verzweigten oder unverzweigten Alkylrest mit 1 bis 6 Kohlenstoffatomen darstellt, mit der Maßgabe, dass wenigstens ein R¹, R², R³ von Wasserstoff verschieden ist;

Optional können auch R¹, R² gemeinsam mit dem Stickstoffatom, an das sie gebunden sind, einen gesättigten heteroaliphatischen Ring bilden, der 3 bis 7 Ringatome aufweist und gegebenenfalls ein oder mehrere weitere Heteroatome ausgewählt aus -O- oder N(R⁴) aufweisen und unsubstituiert oder mit OH oder NH₂ gegebenenfalls mehrfach substituiert sein kann, wobei R⁴ Wasserstoff oder einen verzweigten oder unverzweigten Alkylrest mit 1 bis 6 Kohlenstoffatomen darstellt;

Optional können auch R¹, R², R³ gemeinsam mit dem Stickstoffatom, an das sie gebunden sind, einen gesättigten heteroaliphatischen bicyclischen Ring bilden, der 7 bis 11 Ringatome aufweist und gegebenenfalls ein oder mehrere weitere Heteroatome ausgewählt aus -O- oder N(R⁴) aufweisen und unsubstituiert oder mit OH oder NH₂ gegebenenfalls mehrfach substituiert sein kann, wobei R⁴ Wasserstoff oder einen verzweigten oder unverzweigten Alkylrest mit 1 bis 6 Kohlenstoffatomen darstellt.

Es kann sich also bei dem Amin beispielsweise um ein Monalkyl-, Di- oder ein Trialkylamin handeln. Ein Beispiel hierfür ist Diisopropylamin. Weiterhin kann beispielsweise die Alkylkette durch N(CH₃) unterbrochen sein. Ein Beispiel hierfür ist Dimethylaminopropylamin. Darüber hinaus kann Alkyl mit Hydroxylgruppen substituiert sein. Beispiele hierfür sind Diethanolamin, Monoethanolamin, Methyldiethanolamin, Diisopropanolamin. Weiterhin kann die Alkylkette durch Sauerstoff unterbrochen sein und gegebenenfalls eine Hydroxylgruppe als Substituenten tragen. Ein Beispiel hierfür wäre Diglykolamin. Darüber hinaus können R¹, R² einen Ring bilden, der gegebenenfalls weitere Ringheteroatome wie NH aufweisen kann. Ein Beispiel hierfür wäre Homopiperazin. Auch können R¹, R², R³ einen bicyclischen heterocyclischen Ring bilden. Ein Beispiel hierfür wäre Urotropin.

Vorzugsweise handelt es sich bei dem zur Gaswäsche geeigneten Amin um ein Amin ausgewählt ist aus der Gruppe bestehend aus Diethanolamin, Monoethanolamin, Methyldiethanolamin, Diisopropylamin, Diisopropanolamin, Diglykolamin, 3-Dimethylaminopropylamin und Homopiperazin. Mehr bevorzugt sind Diethanolamin, Monoethanolamin, Methyldiethanolamin, Diisopropylamin, Diisopropanolamin und Diglykolamin. Besonders bevorzugt ist Diglykolamin.

Die Durchführung des Schritts zum Inkontaktbringen des Gasgemisches mit dem erfindungsgemäß imprägnierten metallorganischen Gerüstmaterials kann anhand bekannter Methoden erfolgen.

Vorzugsweise erfolgt das Inkontaktbringen bei vergleichsweise geringen absoluten Drücken. Insbesondere der Partialdruck des zumindest einen sauren Gases liegt vorzugsweise in einem Bereich von höchstens 10 bar, weiter bevorzugt weniger als 7,5 bar, weiter bevorzugt weniger als 5 bar, weiter bevorzugt weniger als 2,5 bar, weiter bevorzugt weniger als 1 bar, weiter bevorzugt in einem Bereich von 10 bis 500 mbar und insbesondere in einem Bereich von 25 bis 250 mbar.

Die Temperatur während des Inkontaktbringens liegt dabei vorzugsweise im Bereich von 0 °C bis 50 °C, weiter bevorzugt im Bereich von 25 °C bis 50 °C.

### Beispiele

### Beispiel 1 Herstellung eines AI-2,6 NDC metallorganischen Gerüstmaterials

AI-2,6 NDC metallorganisches Gerüstmaterial wird analog Beispiel 1 der WO-A 2008/052916 aus Aluminiumchloridhexahydrat und 2,6-Naphthalindicarbonsäure in Gegenwart von N,N-Dimethylformamid (DMF) hergestellt. Es ergibt sich eine spezifische Oberfläche nach Langmuir von 2018 m²/g.

### Beispiel 2 Imprägnierung mit Aminodiglykol

0,562 g des Gerüstmaterials aus Beispiel 1 werden in einer Plastiktüte portionsweise mit 1,107 g Aminodiglykol (2-(2-aminoethoxy)ethanol) versetzt und geschüttelt. Es ergibt sich danach eine spezifische Oberfläche nach Langmuir von 3 m²/g.

### Beispiel 3 Imprägnierung mit 3-(Dimethylamino)propylamin

0,519 g des Gerüstmaterials aus Beispiel 1 werden in einer Plastiktüte portionsweise mit 0,830 g Dimethylaminopropylamin versetzt und geschüttelt. Es ergibt sich danach eine spezifische Oberfläche nach Langmuir von 8 m²/g.

### Beispiel 4 Imprägnierung mit Homopiperazin

Von über Nacht bei 80 °C erwärmtem Gerüstmaterial aus Beispiel 1 werden 0,731 g in eine Plastiktüte gegeben. Dazu tropft man 1,173 g Homopiperazin, das bei 60 °C geschmolzen wurde. Anschließend wird geschüttelt.

### Beispiel 5 Adsorption von Kohlendioxid an imprägniertes Gerüstmaterial

Das Gerüstmaterial aus Beispiel 1 und das imprägnierte metallorganische Gerüstmaterial aus Beispiel 2 werden einer temperaturprogrammierten Desorption (TPD) mit CO₂ Puls Chemisorption unterzogen.

Dabei wird zunächst eine Probe der Gerüstmaterialien mit Hilfe eines Temperaturgradienten von 30 bis 100 °C (5 °C/min., 30 min.) unter Helium (50 cm³/min) vorbehandelt. Anschließend werden mehrere Pulse an 100 % CO₂ (1 Puls enthält 160 µmol CO₂) bei 40 °C beaufschlagt.

Bis zu 4 Pulse ergeben einen Anstieg an adsorbiertem CO₂ bei dem erfindungsgemäßen imprägnierten metallorganischen Gerüstmaterial bevor eine Sättigung eintritt. Der Sättigungswert liegt bei etwa 3250 µg pro g Gerüstmaterial an kumulierter adsorbierter Menge CO₂. Im Vergleich hierzu zeigt das nicht imprägnierte Gerüstmaterial praktisch keine Adsorption.

## Patentansprüche

1. Verfahren zum Abtrennen zumindest eines sauren Gases aus einem Gasgemisch, das das zumindest eine saure Gas enthält, den Schritt enthaltend
(a) Inkontaktbringen des Gasgemisches mit einem porösen metallorganischen Gerüstmaterial, wobei das Gerüstmaterial das zumindest eine saure Gas adsorbiert und wobei das Gerüstmaterial mindestens eine an mindestens ein Metallion koordinativ gebundene mindestens zweizähnige organische Verbindung enthält, wobei das poröse metallorganische Gerüstmaterial mit einem zur Gaswäsche geeigneten Amin imprägniert ist und wobei der Anteil an Amin im Bereich von 1 bis 100 mmol pro g Gerüstmaterial liegt.

2. Verfahren nach Anspruch 1, **dadurch gekennzeichnet, dass** das zumindest eine saure Gas ausgewählt ist aus der Gruppe der Gase bestehend aus Kohlendioxid, Schwefeloxide, Stickoxide und Schwefelwasserstoff.

3. Verfahren nach Anspruch 1 oder 2, **dadurch gekennzeichnet, dass** das Gasgemisch ein Erdölraffinat, Erdgas, Stadtgas, Biogas, Rauchgas oder ein Gemisch davon ist.

4. Verfahren nach einem der Ansprüche 1 bis 3, **dadurch gekennzeichnet, dass** das mindestens eine Metallion ausgewählt ist aus der Gruppe der Metalle bestehend aus Mg, Al, Y, So, Zr, Ti, V, Cr, Mo, Fe, Co, Cu, Ni, Mn, Zn und Lanthaniden ist.

5. Verfahren nach einem der Ansprüche 1 bis 4, **dadurch gekennzeichnet, dass** sich die mindestens eine mindestens zweizähnige organische Verbindung von einer Di-, Tri- oder Tetracarbonsäure ableitet.

6. Verfahren nach einem der Ansprüche 1 bis 5, **dadurch gekennzeichnet, dass** das zur Gaswäsche geeignete Amin ein Amin der Formel R¹N(R²)R³ ist, wobei
R¹, R², R³ unabhängig voneinander Wasserstoff oder einen verzweigten oder unverzweigten Alkylrest mit 1 bis 12 Kohlenstoffatomen darstellen, wobei der Alkylrest eine Kohlenstoffkette aufweist, die durch -O- oder N(R⁴) gegebenenfalls mehrfach unterbrochen sein kann und der Alkylrest unsubstituiert oder mit OH oder NH₂ gegebenenfalls mehrfach substituiert sein kann, wobei R⁴ Wasserstoff oder einen verzweigten oder unverzweigten Alkylrest mit 1 bis 6 Kohlenstoffatomen darstellt, mit der Maßgabe, dass wenigstens ein R¹, R², R³ von Wasserstoff verschieden ist;
Optional können auch R¹, R² gemeinsam mit dem Stickstoffatom, an das sie gebunden sind, einen gesättigten heteroallphatischen Ring bilden, der 3 bis 7 Ringatome aufweist und gegebenenfalls ein oder mehrere weitere Heteroatome ausgewählt aus -O- oder N(R⁴) aufweisen und unsubstituiert oder mit OH oder NH₂ gegebenenfalls mehrfach substituiert sein kann, wobei R⁴ Wasserstoff oder einen verzweigten oder unverzweigten Alkylrest mit 1 bis 6 Kohlenstoffatomen darstellt;
Optional können auch R¹, R², R³ gemeinsam mit dem Stickstoffatom, an das sie gebunden sind, einen gesättigten heteroaliphatischen bicyclischen Ring bilden, der 7 bis 11 Ringatome aufweist und gegebenenfalls ein oder mehrere weitere Heteroatome ausgewählt aus -O- oder N(R⁴) aufweisen und unsubstituiert oder mit OH oder NH₂ gegebenenfalls mehrfach substituiert sein kann, wobei R⁴ Wasserstoff oder einen verzweigten oder unverzweigten Alkylrest mit 1 bis 6 Kohlenstoffatomen darstellt.

7. Verfahren nach einem der Ansprüche 1 bis 6, **dadurch gekennzeichnet, dass** das zur Gaswäsche geeignete Amin ausgewählt aus der Gruppe bestehend aus Diethanolamin, Monoethanolamin, Methyldiethanolamin, Diisopropylamin, Diisopropanolamin, Diglykolamin, 3-Dimethylaminopropylamin und Homopiperazin ist.

8. Verfahren nach einem der Ansprüche 1 bis 7, **dadurch gekennzeichnet, dass** das Inkontaktbringen bei einer Temperatur im Bereich von 0 °C bis 50 °C erfolgt.

9. Verfahren nach einem der Ansprüche 1 bis 8, **dadurch gekennzeichnet, dass** der Partialdruck des zumindest einen sauren Gases höchstens 10 bar beträgt.

10. Poröses metallorganisches Gerüstmaterial, wie in einem der Ansprüche 1 bis 9 angegeben, enthaltend mindestens eine an mindestens ein Metallion koordinativ gebundene mindestens zweizähnige organische Verbindung wobei das poröse metallorganische Gerüstmaterial mit einem zur Gaswäsche geeigneten Amin imprägniert ist und wobei der Anteil am Amin im Bereich von 1 bis 100 mmol pro g Gerüstmaterial liegt.

## Claims

1. A process for separating off at least one acidic gas from a gas mixture comprising the at least one acidic gas, which comprises the step
(a) contacting of the gas mixture with a porous metal-organic framework, where the framework adsorbs the at least one acidic gas and the framework comprises at least one at least bidentate organic compound coordinated to at least one metal ion, wherein the porous metal-organic framework is impregnated with an amine suitable for a gas scrub and the proportion of amine is in the range from 1 to 100 mmol per g of framework.

2. The process according to claim 1, wherein the at least one acidic gas is selected from the group of gases consisting of carbon dioxide, sulfur oxides, nitrogen oxides and hydrogen sulfide.

3. The process according to claim 1 or 2, wherein the gas mixture is a petroleum raffinate, natural gas, town gas, biogas, flue gas or a mixture thereof.

4. The process according to any of claims 1 to 3, wherein the at least one metal ion is selected from the group of metals consisting of Mg, Al, Y, Sc, Zr, Ti, V, Cr, Mo, Fe, Co, Cu, Ni, Mn, Zn and lanthanides.

5. The process according to any of claims 1 to 4, wherein the at least one at least bidentate organic compound is derived from a dicarboxylic, tricarboxylic or tetracarboxylic acid.

6. The process according to any of claims 1 to 5, wherein the amine suitable for a gas scrub is an amine of the formula R¹N(R²)R³, where
R¹, R², R³ are each, independently of one another, hydrogen or a branched or unbranched alkyl radical which has from 1 to 12 carbon atoms and whose carbon chain can be interrupted by one or more -O-or N(R⁴) groups and the alkyl radical can be unsubstituted or substituted by one or more OH or NH₂ groups, where R⁴ is hydrogen or a branched or unbranched alkyl radical having from 1 to 6 carbon atoms, with the proviso that at least one R¹, R², R³ is different from hydrogen;
R¹, R² together with the nitrogen atom to which they are bound can optionally also form a saturated heteroaliphatic ring which has from 3 to 7 ring atoms and may, if appropriate, have one or more further heteroatoms selected from among -O-and N(R⁴) and be unsubstituted or substituted by one or more OH or NH₂ groups, where R⁴ is hydrogen or a branched or unbranched alkyl radical having from 1 to 6 carbon atoms;
R¹, R², R³ together with the nitrogen atom to which they are bound can optionally also form a saturated heteroaliphatic bicyclic ring which has from 7 to 11 ring atoms and may optionally have one or more further heteroatoms selected from among -O- and N(R⁴) and be unsubstituted or substituted by one or more OH or NH₂ groups, where R⁴ is hydrogen or a branched or unbranched alkyl radical having from 1 to 6 carbon atoms.

7. The process according to any of claims 1 to 6, wherein the amine suitable for a gas scrub is selected from the group consisting of diethanolamine, monoethanolamine, methyldiethanolamine, diisopropylamine, diisopropanolamine, diglycolamine, 3-dimethylaminopropylamine and homopiperazine.

8. The process according to any of claims 1 to 7, wherein contacting is carried out at a temperature in the range from 0°C to 50°C.

9. The process according to any of claims 1 to 8, wherein the partial pressure of the at least one acidic gas is not more than 10 bar.

10. A porous metal-organic framework as set forth in any of claims 1 to 9 comprising at least one at least bidentate organic compound coordinated to at least one metal ion, where the porous metal-organic framework is impregnated with an amine suitable for a gas scrub and the proportion of amine is in the range from 1 to 100 mmol per g of framework.

## Revendications

1. Procédé pour séparer au moins un gaz acide d'un mélange gazeux, qui contient ledit au moins un gaz acide, contenant l'étape
(a) mise en contact du mélange gazeux avec un matériau de structure métallo-organique poreux, le matériau de structure adsorbant ledit au moins un gaz acide et le matériau de structure contenant au moins un composé organique, au moins bidentate, lié par coordination à au moins un ion métallique, le matériau de structure métallo-organique poreux étant imprégné d'une amine appropriée pour le lavage gazeux et la proportion d'amine se situant dans la plage de 1 à 100 mmoles par g de matériau de structure.

2. Procédé selon la revendication 1, **caractérisé en ce que** ledit au moins un gaz acide est choisi dans le groupe des gaz constitué par le dioxyde de carbone, les oxydes de soufre, les oxydes d'azote et le sulfure d'hydrogène.

3. Procédé selon la revendication 1 ou 2, **caractérisé en ce que** le mélange gazeux est un raffinat de pétrole, du gaz naturel, du gaz de ville, du biogaz, du gaz de fumée ou un mélange de ceux-ci.

4. Procédé selon l'une quelconque des revendications 1 à 3, **caractérisé en ce que** ledit au moins un ion métallique est choisi dans le groupe des métaux constitué par Mg, Al, Y, Sc, Zr, Ti, V, Cr, Mo, Fe, Co, Cu, Ni, Mn, Zn et les lanthanides.

5. Procédé selon l'une quelconque des revendications 1 à 4, **caractérisé en ce que** ledit au moins un composé organique au moins bidentate est dérivé d'un acide dicarboxylique, tricarboxylique ou tétracarboxylique.

6. Procédé selon l'une quelconque des revendications 1 à 5, **caractérisé en ce que** l'amine appropriée pour le lavage gazeux est une amine de formule R¹N(R²)R³, où
R¹, R², R³ représentent, indépendamment les uns des autres, hydrogène ou un radical alkyle ramifié ou non ramifié comprenant 1 à 12 atomes de carbone, le radical alkyle présentant une chaîne carbonée qui peut être interrompue, le cas échéant plusieurs fois, par -O- ou N(R⁴) et le radical alkyle pouvant être non substitué ou substitué, le cas échéant plusieurs fois, par OH ou NH₂, R⁴ représentant hydrogène ou un radical alkyle ramifié ou non ramifié comprenant 1 à 6 atomes de carbone, à condition qu'au moins un R¹, R², R³ soit différent d'hydrogène ;
éventuellement, R¹, R² peuvent également former, ensemble avec l'atome d'azote auquel ils sont liés, un cycle hétéroaliphatique saturé, qui présente 3 à 7 atomes de cycle et qui peut présenter le cas échéant un ou plusieurs autres hétéroatomes choisis parmi -O- ou N(R⁴) et qui peut être non substitué ou substitué, le cas échéant plusieurs fois, par OH ou NH₂, R⁴ représentant hydrogène ou un radical alkyle ramifié ou non ramifié comprenant 1 à 6 atomes de carbone ;
éventuellement, R¹, R², R³ peuvent également former, ensemble avec l'atome d'azote auquel ils sont liés, un cycle bicyclique hétéroaliphatique saturé, qui présente 7 à 11 atomes de cycle et qui peut présenter le cas échéant un ou plusieurs autres hétéroatomes choisis parmi -O- ou N(R⁴) et qui peut être non substitué ou substitué, le cas échéant plusieurs fois, par OH ou NH₂, R⁴ représentant hydrogène ou un radical alkyle ramifié ou non ramifié comprenant 1 à 6 atomes de carbone.

7. Procédé selon l'une quelconque des revendications 1 à 6, **caractérisé en ce que** l'amine appropriée pour le lavage gazeux est choisie dans le groupe constitué par la diéthanolamine, la monoéthanolamine, la méthyldiéthanolamine, la diisopropylamine, la diisopropanolamine, la diglycolamine, la 3-diméthylaminopropylamine et l'homopipérazine.

8. Procédé selon l'une quelconque des revendications 1 à 7, **caractérisé en ce que** la mise en contact a lieu à une température dans la plage de 0°C à 50°C.

9. Procédé selon l'une quelconque des revendications 1 à 8, **caractérisé en ce que** la pression partielle dudit au moins un gaz acide vaut au plus 10 bars.

10. Matériau de structure métallo-organique poreux, tel qu'indiqué dans l'une quelconque des revendications 1 à 9, contenant au moins un composé organique, au moins bidentate, lié par coordination à au moins un ion métallique, le matériau de structure métallo-organique poreux étant imprégné d'une amine appropriée pour le lavage gazeux et la proportion d'amine se situant dans la plage de 1 à 100 mmoles par g de matériau de structure.
